# EUROPÄISCHE PATENTSCHRIFT

(11) **EP 1 915 424 B1**
(45) Veröffentlichungstag und Bekanntmachung des Hinweises auf die Patenterteilung: **26.11.2008**
(21) Anmeldenummer: 06762881.8
(22) Anmeldetag: 28.07.2006
(51) Int. Cl.: C08K 9/10

(54) **MIKROVERKAPSELTE KAUTSCHUKADDITIVE UND VERFAHREN ZU DEREN HERSTELLUNG**
MICROENCAPSULATED RUBBER ADDITIVES AND METHOD FOR THE PRODUCTION THEREOF
ADDITIFS CAOUTCHOUTEUX MICROENCAPSULES ET PROCEDE PERMETTANT DE LES PRODUIRE

(30) Priorität: 28.07.2005 DE 102005035388
(43) Veröffentlichungstag der Anmeldung: 30.04.2008
(73) Patentinhaber: Fraunhofer-Gesellschaft zur Förderung der angewandten Forschung e.V., 80686 München (DE); Schill & Seilacher AG, 71032 Böblingen (DE)
(72) Erfinder: JOBMANN, Monika, 21615 Buxtehude (DE); RAFLER, Gerald, 14473 Potzdam (DE); HENSEL, Manfred, 21255 Tostedt (DE)
(74) Vertreter: Pfenning, Meinig & Partner GbR
(86) Internationale Anmeldenummer: PCT/EP2006/007499
(87) Internationale Veröffentlichungsnummer: WO 2007/012495

(56) Entgegenhaltungen:
- WO-A-93/23795
- WO-A-20/04024313
- US-A- 2 623 079
- DATABASE WPI Week 197729 Derwent Publications Ltd., London, GB; AN 1977-51364Y XP002401482 & JP 52 069455 A (BRIDGESTONE TIRE KK) 9. Juni 1977 (1977-06-09)

## Beschreibung

Die Erfindung betrifft verkapselte Kautschukadditive in Form von Mikrokapseln mit einer polymeren Kapselwand sowie einem mindestens ein Kautschukadditiv enthaltenden Kern. Ebenso betrifft die Erfindung ein Verfahren zur Herstellung von derartigen Mikrokapseln. Die erfindungsgemäßen Mikrokapseln werden bei der Vulkanisation von Natur- und Synthese-Kautschuken eingesetzt.

Zur Vernetzung von Synthese-(Dienkautschuke) und Naturkautschuken wird vorzugsweise Schwefel eingesetzt. Vor der Heißvulkanisation muss der Schwefel zusammen mit Füllstoffen und weiteren Additiven bei Temperaturen bis 110 °C gut in die mastifizierte Kautschukmischung (mechanisch und thermisch abgebaute Kautschuke) eingearbeitet werden. Bei Temperaturen von 100 °C ist Schwefel in der Kautschukmischung gut löslich; beim Abkühlen der Mischung erfolgt jedoch eine unerwünschte Entmischung des Systems durch Kristallisation des Schwefels, die zu Vulkanisationsproblemen führt. Eine Lagerung der Kautschukmischung bei höheren Temperaturen zur Vermeidung des Auskristallisierens führt zu vorzeitiger Vernetzung und Minderung der Produktqualität in den Finalprodukten.

Die zeitliche oder örtliche Verfügbarkeit von reaktiven oder nichtreaktiven Additiven für Kunststoffe, z.B. Thermoplaste, Elastomere oder Duromere, lässt sich effizient durch Umhüllung oder Einbettung in linearkettige oder netzwerkbildende Polymere steuern. Derartige polymerbasierte Mikrokomposite sind in Form von Mikrokapseln mit Kern-Schale-Struktur bzw. von mikroskaligen Matrixpartikeln mit weitgehend homogener Verteilung der Komponenten über den Partikelquerschnitt bekannt (Ch. A. Finch, R. Bodmeier: "Microencapsulation" in Ullmann's Encyclopedia of Industrial Chemistry, 6th Ed. 2001 Electronic Release). Der Kern von Mikrokapseln kann in fester, flüssiger oder gasförmiger Form (Hohlkugeln) vorliegen. Bei Matrixpartikeln sind ein- und mehrkomponentige Systeme bekannt.

Verfahren zur Herstellung von polymerbasierten Mikropartikeln mittels reaktiver und nichtreaktiver Partikelbildungsprozesse sind vielfach beschrieben. Bei der reaktiven Partikelbildung erfolgt die Bildung der Wand oder der Matrix parallel zu einem Polymerisations-, Polykondensations- oder Polyadditionsprozess. Bei den nichtreaktiven Verfahren werden filmbildende Polymere direkt eingesetzt, die auf thermodynamische Weise zur Phasenseparation und zur Partikelbildung gebracht werden (M. Jobmann, G. Rafler: Pharm. Ind. 60 (1998) 979).

Für reaktive Verfahren zur Verkapselung fester oder flüssiger Kernmaterialien werden vorwiegend Melamin-Formaldehyd-Harze eingesetzt (DE 199 23 202), aber auch Isocyanat/Amin-Systeme werden beschrieben (AZ 101 56 672). Melamin-Formaldehyd-Harze sind zur Umhüllung hydrophober Kernmaterialien breit und problemlos einsetzbar, und sie können zur Partikelbildung aus wässriger Phase appliziert werden. Reaktivverfahren erfordern Kernmaterialien, die inert gegenüber den wand- bzw. matrixbildenden Monomeren oder Oligomeren sind, d.h. dass sie keine Reaktion mit anderen beteiligten Komponenten eingehen. Ausgenommen die Melamin-Formaldehyd-Harze sind bei diesen Reaktivverfahren häufig lange Reaktionszeiten erforderlich (bis zu 24 h). Die Mikrokapselgröße kann in Abhängigkeit von den Reaktionsbedingungen (z.B. Emulgatorzusatz, Dispergiermethode) zwischen 1 und 150 pm liegen.

Bei den nichtreaktiven Verfahren wird ein Polymeres aus Lösung durch Dispergier-, Vertropfungs- oder Sprühprozesse bzw. über Verfahren, die auf dem Prinzip der Flüssig-Flüssig-Phasentrennung basieren, in eine partikuläre Form überführt. Dispergier-, Vertropfungs- und Sprühverfahren umfassen eine Lösungsmittelverdampfung; Phasentrennverfahren dagegen basieren auf dem Prinzip der Ausfällung des Wandmaterials, z.B. durch Zugabe einer inkompatiblen Komponente zur Polymerlösung. Ausschlaggebend für die Auswahl eines Kapselverfahrens ist die Löslichkeit des polymeren Wand- bzw. Matrixmaterials in einem organischen Lösungsmittel sowie die Verträglichkeit des zu verkapselnden bzw. einzubettenden Wirkstoffs mit diesem Lösungsmittel.

Die Eigenschaften mikropartikulärer Zwei- oder Mehrstoffsysteme lassen sich im Werkstoffbereich sowohl bei der Prozess- als auch der Materialoptimierung in vielfältiger Weise nutzen. Derartige Einsatzfelder sind beispielsweise die zeitlich oder auch örtlich kontrollierte Freisetzung von Reaktionskomponenten, Katalysatoren, Initiatoren oder Stabilisatoren, die Vereinfachung von Dosier- und Mischprozessen, der Schutz sensitiver Additive vor Umwelteinflüssen.bzw. Schutz der Polymermatrix vor unerwünschten Kontakten mit dem Additiv oder die Verbesserung der Kompatibilität von Kunststoffadditiven zur polymeren Matrix. Voraussetzung für die Anwendung polymerbasierter Mikrokapseln oder Matrixpartikel zur Prozess- und/oder Materialoptimierung ist deren thermische, mechanische und Medienstabilität unter den jeweiligen technologischen Prozess bzw. materialtypischen Einsatzbedingungen sowie die Möglichkeit einer steuerbaren bzw. verhinderbaren Liberation der umhüllten bzw. eingelagerten Substanzen.

Für den Einsatz in vulkanisierbaren Elastomeren ist temporäre Stabilität der Mikrokapseln oder Matrixpartikel unter Formulierbedingungen in Knetern, Kalandern oder Doppelschneckenextrudern bei Temperaturen bis 120 °C und hohen Scherbeanspruchungen sowie ihre Zerstörung mit schneller Schwefelfreisetzung unter Heißvulkanisationsbedingungen (über 150 °C) unabdingbare Voraussetzung.

In der DE 197 54 342 A1 werden mit diversen Polymer- bzw. Wachsmaterialien umhüllte Schwefelpartikel beschrieben, die Schwefel durch Aufschmelzen bzw. Auflösen der Kapselwand in der Kautschukmischung bei Temperaturen von 120 - 140 °C freisetzen. Unterhalb der Schmelztemperatur der Kapselwand sollen die Kapseln stabil sein. Die geringen Temperaturunterschiede zwischen Stabilität und Aufschmelzen oder Auflösen der Kapselwand sind in dem Kautschukprozess infolge unkontrollierter Erwärmung durch Friktion beim Mischen der hochviskosen Mischungen technologisch äußerst schwer beherrschbar. Ein Vulkanisationsverfahren mit Einsatz von unter Mastifikationsbedingungen stabil verkapseltem Schwefel und Freisetzung durch Aufschmelzen oder Auflösen der Kapselwand bei den nur wenig höheren Temperaturen der Heißvulkanisation ist infolge zu geringer Parametervariation nicht zu realisieren.

Linearkettige, thermoplastisch verformbare Polymere oder Wachse sind für die Mikroverkapselung von Prozesshilfsmitteln, Reaktionskomponenten oder eigenschaftsmodifizierenden Additiven generell nur begrenzt anwendbar, da sie unter Compoundier- und Verarbeitungsbedingungen von üblichen Polymermaterialien verformt, aufgelöst oder zerstört werden. Die erforderlichen Schmelzpunktdifferenzen von mindestens 40 - 50 °C können nur selten für sehr niedrig erweichende Polymere realisiert werden. Stabilere Kapselwände können nur durch Einsatz duromerer Wandmaterialien erzielt werden. Duromere Netzwerkpolymere sind unschmelzbar und die Freisetzung erfolgt vor allem durch thermisch aktivierte Diffusion des bei diesen Temperaturen flüssigen Schwefels bzw. auch durch thermisch generierte Artefakte der Kapselwand, durch die der flüssige Schwefel dann austreten kann.

In der DE 102 41 942 A1 wird ein Verfahren zur Mikroverkapselung von Flüssig- bzw. Mahlschwefel beschrieben, dass durch den Einsatz von nichtschmelzenden Melaminharzen als Kapselwandmaterial in Kombination mit einer abrasivitätsmindernden Gleitbeschichtung die genannten Einschränkungen bisheriger technischer Lösungen überwindet und mit dem ein mikroverkapselter Schwefel erhalten wird, der den Anforderungen von Kautschukverarbeitern, insbesondere Reifenherstellern weitestgehend entspricht. Die Gleitbeschichtung bringt jedoch zusätzliche Komponenten in die Gummimischung, deren Wirkungen auf das Endprodukt nicht bekannt sind. In Abhängigkeit von der Kautschukmischung und jeweiligen Applikation können die der Kautschukmischung zugänglichen Stoffe der Gleitbeschichtung die Anwendung dieser erarbeiteten technischen Lösung einschränken oder auch verhindern.

Es war daher Aufgabe der vorliegenden Erfindung, eine polymerbasierte Schwefelformulierung für die Kautschukvulkanisation mit hohem Schwefelgehalt bereitzustellen, die den Schwefel unter Mastifizier- und Lagerbedingungen ausreichend von der Kautschukmischung trennt und ihn unter Vulkanisationsbedingungen mit einer auf den Prozess abgestimmten Geschwindigkeit freisetzt.

Diese Aufgabe wird durch die gattungsgemäßen Mikrokapseln mit den kennzeichnenden Merkmalen des Anspruchs 1 sowie durch das Verfahren zur Herstellung der Mikrokapseln mit den Merkmalen des Anspruchs 18 gelöst. Die weiteren abhängigen Ansprüche zeigen vorteilhafte Weiterbildungen auf. In Anspruch 32 wird die Verwendung der erfindungsgemäßen Mikrokapseln genannt.

Erfindungsgemäß wird eine Mikrokapsel bereitgestellt, deren Partikelwand aus einem interpenetrierenden Netzwerk besteht, das aus einem nicht-schmelzbaren Polymer in Form einer Reaktivharzkomponente und mindestens einer anionischen Polyelektrolyt- oder Ionomer-Komponente gebildet ist. Der Kapselkern besteht aus einem Kautschukadditiv. Die erfindungsgemäße Kapselwand ist unter Mastifizier- und Lagerbedingungen mechanisch und thermisch stabil, so dass das Kautschukadditiv von der umgebenden Kautschukmischung separiert ist und mit dieser nicht reagieren kann. Die Freisetzung des Kautschukadditivs aus den.Mikrokapseln und damit dessen Fähigkeit, mit dem Kautschuk vernetzend reagieren zu können, erfolgt erst bei höheren Temperaturen, wie sie bei der Kautschukvulkanisation auftreten, wobei die gewählte Prozesstemperatur im wesentlichen Ausmaß und Geschwindigkeit der Freisetzung des Kautschukadditivs bestimmt. Vorzugsweise werden für die Kapselwand als nicht-schmelzende Polymere Reaktivharzsysteme, insbesondere Melamim-Formaldehyd- oder Polyurethan- bzw. PolyharnstoffHarze verwendet. Im Falle der Polyharnstoffharze sind diese bevorzugt aus Diisocyanaten und polyfunktionellen Aminen gebildet.

Vorzugsweise sind die genannten Polyelektrolyt-und/oder Ionomer-Komponenten anionisch substituierte Polymere. Die anionisch substituierten Polymere sind dabei vorzugsweise ausgewählt aus der Gruppe bestehend aus den Homo- und Copolymeren der Acryl- und Methacrylsäure, der Maleinsäure, der Vinylphosphorsäure, der Vinylsulfonsäure, des Styrols und der Styrolphosphonsäure.

Die Kapselwand der Mikrokapseln ist aus einem in Wasser löslichen Melamim-Formaldehyd-Harz und einem Polyelektrolyten gebildet.

Eine zweite, ebenso bevorzugte Variante sieht vor, dass die Kapselwand aus einem in einem organischen Lösungsmittel löslichen Melamim-Formaldehyd-Harz und einem Ionomer gebildet ist.

Der Kapselkern beinhaltet vorzugsweise als Kautschukadditiv Schwefel. Der Schwefel kann dabei sowohl in flüssiger Form oder in fester Form, d.h. als Mahlschwefel, vorliegen. Die Verkapselung von flüssigem Schwefel erfordert für wässrige Phasen das Arbeiten unter Druck, bei organophilen Harz-/Ionomer-Systemen höhersiedende Lösungsmittel als kontinuierliche Phase, wie z.B. Sulfone, Sulfoxide, Arylether, Ketone oder Amidlösungsmittel.

Der Schwefelgehalt der Mikrokapseln beträgt bevorzugt mindestens 70 Gew.-%, besonders bevorzugt von 80 bis 95 Gew.-%.

Die Geometrie der Mikrokapsel sowie deren Größe und ihre Verteilung sind eine Funktion des das Kautschukadditiv enthaltenden Kerns. Bevorzugt beträgt die mittlere Partikelgröße 1 bis 30 µm bei Gehalten des Kautschukadditivs von 85 bis 98 Gew.-%. Für Mikrokapseln, die z.B. Mahlschefel enthalten, sind die Partikelparameter durch Geometrie, Größe und Verteilung des Pulvers vorgegeben. Bei der Verkapselung von flüssigen Kautschukadditiven sind die Partikelparameter eine Funktion der Dispergierung des flüssigen Additivs in der wässrigen bzw. organischen Phase, in der das Additiv dispergiert wird.

Eine weitere bevorzugte Ausführungsform sieht vor, dass die Mikrokapsel eine weitere äußere Kapselwand oder Beschichtung aufweist. Für spezielle, besonders langzeitstabile mastifizierte Kautschukmischungen kann so auf die erfindungsgemäßen Mikrokapseln eine wie in der DE 102 41 942 A1 beschriebene haftvermindernde bzw. kontrolliert abbauende Beschichtung aus einem zweiten, strukturdifferenten Polymer, das vorzugsweise linearkettig ist, oder einer Schicht aus niedermolekularen organischen oder anorganischen Substanzen aufgebracht sein.

Das strukturdifferente Polymer für die Haftminderung bzw. kontrollierte Ablösung ist dabei vorzugsweise ausgewählt aus der Gruppe bestehend aus Polyacrylaten, Polyacrylnitrilen, Polyethylenglycolen, Ethylcellulosen sowie Stärke-Fettsäureester und Stärkecarbamate langkettiger Isocyanate. Als niedermolekulare organische bzw. anorganische Substanzen sind Wachse, Fettsäurederivate, Silikone, Siloxane oder Silicate bevorzugt.

Die Aufbringung der Gleit- bzw. Abtragsschicht erfolgt für polymerbasierte Sekundärbeschichtungen in Abhängigkeit von der Polymerstruktur nach bekannten Verfahren der nicht-reaktiven Verkapselung durch Coazerfation, Lösungsmittelverdampfung, Aussalzen oder Sprühtrocknung. Niedermolekulare Beschichtungsmittel werden vorzugsweise auf organischer Lösung oder wässriger Dispersion aufgebracht. Vorzugsweise erfolgt vor dem Aufbringen der Gleit- bzw. Abtragsschicht eine Separation der das Kautschukadditiv enthaltenden Mikrokapseln aus dem Verkapselungsansatz. Auch eine direkte Weiterverarbeitung ist möglich, vorzugsweise dann, wenn Sprühprozesse angewendet werden können.

Der besondere Vorteil der erfindungsgemäßen Mikrokapseln beruht darauf, dass unter Formulierungs- und Verarbeitungsbedingungen, wie sie aus Knetern, Kalandern oder Doppelschneckenextrudern bekannt sind, d.h. bei Temperaturen bis 120 °C und bevorzugt bis 140 °C, diese thermisch und mechanisch stabil sind.

Erfindungsgemäß wird ebenso ein Verfahren zur Herstellung der Mikrokapseln bereitgestellt. Hierbei wird in einem ersten Schritt mindestens ein Kautschukadditiv in einer Lösung, die mindestens eine ein Reaktivharz bildende Verbindung und mindestens eine Polyelektrolyt- oder Ionomer-Komponente enthält, unter starker Scherung dispergiert. In einem anschließenden Schritt erfolgt dann der Zusatz eines Katalysators oder es erfolgt eine Temperatureinwirkung, so dass es zur Ausbildung einer das Kautschukadditiv einschließenden Kapselwand kommt.

Die Aufbringung der Kapselwand auf dem Kautschukadditiv kann dabei als Batch-Prozess, quasikontinuierlich oder auch kontinuierlich in aus dem Stand der Technik bekannten Reaktoren und mit der bekannten Rühr- und Dispergiertechnik für Verkapselungsprozesse durchgeführt werden.

Die das Reaktions-harz bildende Komponente wird in Form eines Präpolymers durchgeführt, d.h. das Reaktivharz wird ex situ hergestellt. Eine andere bevorzugte Variante sieht vor, dass das Reaktionsharz im ersten Verfahrensschritt in situ aus den das Reaktionsharz bildenden Verbindungen, also den Monomeren, gebildet wird.

Für die Ausbildung der Kapselwand ist eine Kondensations- bzw. Additionsreaktion der Reaktivharzkomponente in Gegenwart der Polyelektrolyt- bzw. Ionomer-komponente unter Bildung eines semi-interpenetrie-renden Netzwerkes erforderlich, wobei die ionische Komponente in das vernetzte Reaktivharz eingebunden wird. Bei interpenetrierenden und semi-interpenetrierenden Netzwerken erfolgt keine direkte chemische Bindung zwischen den Komponenten, es handelt sich vielmehr um verschlungene Polymerketten. Diese kann durch organische Säuren, insbesondere durch Zitronen-oder Isophtalsäure, oder auch anorganische Säuren, insbesondere Phosphor-, phosphorige oder Amidosulfonsäure, katalysiert werden. Organische Säuren können dabei auch für die Wandbildung der organophilen Ausgangskomponenten in nicht-wässrige Phasen eingesetzt werden.

Das Problem der Agglomeratbildung im Kapselkern kann in einer bevorzugten Variante dadurch beseitigt werden, dass die Verkapselung unter Ultraschallbehandlung durchgeführt wird.

Erfindungsgemäß verkapselte Kautschukadditive können durch Zusatz bekannter Granulierhilfsmittel oder auch mittels des Sekundärbeschichtungsmittels selbst granuliert werden. Der Einsatz des verkapselten Kautschukadditivs in Synthese- oder Naturkautschuk kann sprüh- oder vakuumgetrocknet erfolgen. Filtertrockene Mikrokapseln mit einem Restfeuchtegehalt von 2 %, wie sie nach der Separation aus organischer Beschichtungsmittellösung erhalten werden, können direkt eingesetzt werden.

Mikroverkapselte Kautschukadditive werden analog unverkapseltem Material zur Kautschukvulkanisation eingesetzt. Die Einarbeitung von mikroverkapselten Kautschukadditiven erfolgt nach aus dem Stand der Technik bekannten Technologien mit den ebenfalls aus dem Stand der Technik bekannten Apparaturen. Die temporäre thermische und mechanische Stabilität der Kapselwand unter den spezifischen Verarbeitungsbedingungen der Kautschukformulierung wird durch die chemische Struktur des sich bildenden erfindungsgemäßen Polymernetzwerks und durch die Größe der Mikropartikel bestimmt.

Die erfindungsgemäßen schwefelhaltigen Mikrokomposite lassen sich problemlos in Gummimischungen einmischen und in der Mischung auch homogener verteilen, als unverkapselter Schwefel.

Die Effizienz der erfindungsgemäßen Verfahrensweise zur Umhüllung von flüssigem oder gemahlenem Schwefel sowie die Stabilität der Kapselwand unter Mastikationsbedingungen lässt sich am sichersten anhand des aus vulkanisationsfähigen Kautschukmischungen auskristallisierenden Schwefels sowie des Verlaufs der Vulkanisation bestimmen. Unverkapselter bzw. aus den Kapseln zu früh freigesetzter Schwefel, der sich unter Mastikationsbedingungen vollständig im erwärmten Kautschuk löst, ist in der kalten Kautschukmischung nur wenig löslich und kristallisiert langsam aus. Diese die Gummiverarbeitung in vielfältiger Weise störende Heterogenisierung des Systems Kautschuk/Schwefel wird durch den Einsatz von erfindungsgemäß hergestelltem, mikroverkapseltem Schwefel vollständig vermieden, da derart umhüllter Schwefel in der Kautschukmischung eine separate Phase bildet und damit keinen Löse-/Kristallisationsprozessen unterliegen kann.

Standardgemäß hergestellte Gummimischungen zeigten erste Anzeichen einer Schwefelheterogenisierung nach 2 h. Gummimischungen, die umhüllten Schwefel enthielten waren demgegenüber in Abhängigkeit von Wandaufbau und Verkapselungstechnologie länger als 21 d stabil und konnten auch nach dieser Lagerzeit problemlos weiterverarbeitet und vulkanisiert werden. Die Zeiten für die Lagerstabilität (festgestellt am "Ausblühverhalten" des Schwefels in der Gummimischung) sind ein entscheidendes Kriterium und sie sind deshalb in den Beispielen mit angegeben.

Die Prüfung des Ausblühverhaltens erfolgte in einer praxisnahen Kautschukmischung (SMR 10) mit einer Schwefelmenge von 5,5 Massenanteilen Schwefel bezogen auf 100 Massenanteile Kautschuk (=phr), wobei die Muster von mikroverkapseltem Schwefel in einer Menge eingesetzt wurden, die 5,5 phr entsprachen. Weitere Bestandteile der Kautschukmischung waren als Füllstoff Ruß (Statex N-326), Mineralölweichmacher Sundex 790, als Aktivatoren Zinkoxid und Stearinsäure, als Alterungsschutzmittel Dimethylbutyl-p-phenylendiamin (6PPD, Vulkanox 4020) und Trimethyl-Dihydrochinolin (TMQ, Vulkanox HS/LG) und als Beschleuniger N,N-Dicyclohexyl-2Benzothiazylsulfenamid (DCBS, Vulkacit DZ/EG/C). Die Rezepturbestandteile wurden in einem Produktionskneter (Werner & Pleiderer Innenmischer GK 1,5) gemischt und die Testmischungen mit der frisch mastizierten Vormischung hergestellt. Das Einmischen des Schwefels und weiterer Rezepturbestandteile fand unter praxisnahen Mischbedingungen statt. Die Mischfolge sah wie folgt aus:
Premastikation (kommerzielle Vormischung)
Innenmischer GK 1,5 N
Start bei 60 °C
Mischzeit 2 min

Schwefelmischung (Vormischung, Schwefel bzw. mikroverkapselter Schwefel, Beschleuniger)
Innenmischer GK 1,5 N
Start bei 60 °C
Mischzeit 1,3 min.

Die Überprüfung der Vernetzungscharakteristik wurde gemäß DIN 5352 im Rheometer (MDR 2000, Alpha Technologies) bei 160 °C durchgeführt, wobei das Drehmoment (als Charakteristikum für die Vernetzungshöhe) abhängig von der Zeit ermittelt wurde (Beispiel):

| Schwefel | unverkapselt | verkapselt |
|---|---|---|
| Drehmoment MS (dNm) | 2,5 | 2,5 |
| Drehmoment MH (dNm) | 19,0 | 18,6 |
| tc 10% (min) | 1,4 | 1,8 |
| tc 90% (min) | 7,8 | 8,3 |
| tc 100% (min) | 14,0 | 14,3 |

Der Messwert des maximalen Drehmoments, d.h. der maximalen Vernetzungshöhe MH (auch Vernetzungsausbeute) ist ein erstes Maß für die zur Vulkanisation unter den gewählten Bedingungen zur Verfügung stehende Schwefelmenge, d.h. im Falle der mikroverkapselten Produktmuster auch für das vollständige Öffnen der Kapseln während der Vulkanisation. Der Messwert tc 10% in min ist ein Maß für den Start der Vernetzung (Vulkanisation) und im Falle des mikroverkapselten Schwefels auch für das rechtzeitige Öffnen der Kapsel während der Vulkanisation. Es wurde gefunden, dass der tc-10%-Wert ein erster Hinweis auf die Stabilität des mikroverkapselten Schwefels im Kautschuk ist. Höhere tc-10%-Werte (> 1,8 min) wurden für Testmischungen gefunden, in denen das Ausblühen des Schwefels deutlich verzögert wurde (> 2 Wochen). Der tc-10%-Wert wird in den Beispielen als Charakteristikum der Stabilität des mikroverkapselten Schwefels mit angegeben.

### Ausblühverhalten

Die Beurteilung des Ausblühverhaltens erfolgte visuell unter Berücksichtigung von zwei Beürteilungskriterien:
• Ausblühverhalten insgesamt, sichtbar durch grau-weiß Färbungen auf der Oberfläche der Mischungen
• Ausblühverhalten an "gereizten" Stellen (hervorgerufen z.B. durch Fingerabdrücke - Kristallisa-tionskeime), sichtbar durch Weißfärbung dieser Stellen.

Die Abstufung des Ausblühens wurde wie folgt festgelegt:
- ---: kein Ausblühen
- +: schwaches Ausblühen (grau-weiß Färbung an wenigen Punkten)
- ++: Ausblühen
- +++: sehr starkes Ausblühen (komplette Oberfläche grau-weiß gefärbt)

In den Beispielen wird als "Stabilität nach Kautschukeinarbeitung" die Zeit angegeben, nach der an nicht gereizten Stellen noch, kein Ausblühen und an gereizten Stellen schwaches Ausblühen beobachtet wurde.

### Vergleichsbeispiel 1

### Singuläre Kapselwand aus Melamin-Formaldehyd-Harz

In einem Rührgefäß werden 96 g feingemahlener Schwefel, 28 g Melamin-Formaldehyd-Harz (M/F-Harz) des Typs PIAMID M 50 und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht:
115 g
Extrahierbarer Schwefel: 3,5 %
Stabilität nach Kautschukeinarbeitung: 120 h (tc-10%: 1,63 min)

### Vergleichsbeispiel 2

### Doppelwand aus Melamin-Formaldehyd-Harz

In einem Rührgefäß werden 96 g feingemahlener Schwefel, 28 g Melamin-Formaldehyd-Harz des Typs PIAMID M 50 und 16,0 g Isophthalsäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Mikrokomposite werden abgetrennt und in analoger Weise mit 28 g M/F-Harz in Gegenwart von 16,0 g Isophthalsäure in 480 ml Wasser ein zweites Mal verkapselt. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht:
120 g
Extrahierbarer Schwefel: 0,1 %
Stabilität nach Kautschukeinarbeitung: 275 h (tc-10%: 1,65 min)

### Vergleichsbeispiel 3

### Komplexe Kapselwand aus Doppelmantel und Sekundärbeschichtung

100 g analog Beispiel 2 hergestellte filterfeuchte Mikrokomposite mit M/F-Harz-Doppelwand werden mit 20 g Paraffinwachs, gelöst in 0,5 1 Benzin, bei 70 °C beschichtet. Die beschichteten Mikrokomposite werden bei der Beschichtungstemperatur abgetrennt und luftgetrocknet.

Ausbeute, beschichteter mikroverkapselter Schwefel,
lufttrocken: 104 g
Extrahierbarer Schwefel: 1,2 %
Stabilität nach Kautschukeinarbeitung: 336 h (tc-10%: 1,70 min)

### Beispiel 1

### Singuläre Kapselwand aus Melamin-Formaldehyd-Harz und Polyethylen-co-natriummaleat

In einem Rührgefäß werden 96 g feingemahlener Schwefel, 28 g Melamin-Formaldehyd-Harz (M/F-Harz) des Typs PIAMID M 50, 0,5 g Ploly(ethylen-co-natriummaleat (1 ml einer 50 %igen wässrigen Lösung) und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht:
115 g
Extrahierbarer Schwefel: 3,0 %
Stabilität nach Kautschukeinarbeitung: 408 h (tc-10%: 1,80 min)

### Beispiel 2

### Singuläre Kapselwand aus Melamin-Formaldehyd-Harz und Poly(ethylen-co-natriummaleat) mit in situ Melaminharzbildung

In einem Rührgefäß werden 13,4 g Melamin, suspendiert in 400 ml Wasser, mit 34,7 ml einer 37 %igen Lösung von Formaldehyd in Wasser in Gegenwart von 4,4 ml 10%iger wässriger NaOH bei 70 °C umgesetzt. Nach Neutralisation werden diesem Ansatz 96 g feingemahlener Schwefel, 0,5 g Poly(ethylen-co-natrium-maleat (1 ml einer 50 %igen wässrigen Lösung) und 16,8 g Zitronensäure mit einem Hochleistungsrühr- und Pispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht:
115 g
Extrahierbarer Schwefel: 3,5 %
Stabilität nach Kautschukeinarbeitung: 480 h (tc-10%: 1,83 min)

### Beispiel 3

### Singuläre Kapselwand aus Melamin-Formaldehyd-Harz und Poly(styren-comaleinsäure)

In einem Rührgefäß werden 96 g feingemahlener Schwefel, 28 g Melamin-Formaldehyd-Harz (M/F-Harz) des Typs PIAMID M 50, Poly(styren-co-maleinsäureanhydrid)-Hydrolysat (hergestellt aus 0,4 g Po-ly(styren-co-maleinsäureanhydrid) und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht:
115 g
Extrahierbarer Schwefel: 3,5 %
Stabilität nach Kautschukeinarbeitung: 396 h (tc-10%: 1,79 min)

### Beispiel 4

### Doppelwand aus Melamin-Formaldehyd-Harz und Poly(ethylen-co-natriummaleat)

In einem Rührgefäß werden 96 g feingemahlener Schwefel, 28 g Melamin-Formaldehyd-Harz (M/F-Harz) des Typs PIAMID M 50, 0,5 g Poly(ethylen-co-natriummaleat (1 ml einer 50 %igen wässrigen Lösung) und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in analoger Weise mit 28 g M/F-Harz und 0,5 g Poly(ethylen-co-natrium-maleat (1 ml einer 50 %igen wässrigen Lösung) in Gegenwart von 16,8 g Zitronensäure in 480 ml Wasser ein zweites Mal verkapselt, wobei einfaches Rühren mit einem Ankerrührer.

Die Kapseln werden abgetrennt, 6 h bei 110 °C nachgehärtet und auf Schwefelfreisetzung und Stabilität in der Kautschukmischung (wie in Beispiel 1 beschrieben) getestet.

Ausbeute, mikroverkapselter Schwefel, filterfeucht:
115 g
Extrahlerbarer Schwefel: 0,1 %
Stabilität nach Kautschukeinarbeitung: 504 h (tc-10%: 1,84 min)

### Beispiel 5

### Singuläre Kapselwand aus Melamin-Formaldehyd-Harz und Poly(styren-comaleinsäure), Einsatz von Flüssigschwefel

100 g Schwefel werden bei 130 °C aufgeschmolzen und die Schmelze zügig einem Mikroverkapselungsansatz, bestehend aus 28 g Melamin-Formaldehyd-Harz des Typs PIAMID M 50, Poly(styren-co-maleinsäureanhydrid)-Hydrolysat (hergestellt aus 0,4 g Poly(styren-co-maleinsäureanhydrid) und 12,0 g Isophthalsäure und 480 ml Wasser zugeführt und mit einem Hochleistungsrühr- und Dispergiergerät (ULTRA-TURRAX) bei 90 °C intensiv durchmischt. Die Wandbildung um die feinverteilten Schwefelpartikel ist nach 4 min abgeschlossen. Zur Aushärtung wird.noch 120 min unter Rührung mit einem geringscherenden Rührer nachkondensiert. Die Kapseln werden abgetrennt und auf Schwefelfreisetzung und Stabilität in der Kautschukmischung getestet.

Ausbeute, mikroverkapselter Schwefel, filterfeucht:
125 g
Extrahierbarer Schwefel: nicht nachweisbar
Stabilität nach Kautschukeinarbeitung. 384 h (tc-10%: 1,77 min)

### Beispiel 6

### Doppelwand aus Melamin-Formaldehyd-Harz und Po-ly(styren-co-malein-säure), thermische Nachhärtung

In einem Rührgefäß werden 96 g feingemahlener Schwefel, 28 g Melamin-Formaldehyd-Harz des Typs PIAMID M 50, Poly(styren-co-maleinsäureanhydrid)-Hydrolysat (hergestellt aus 0,4 g Poly(styren-co-maleinsäureanhydrid) und 12,0 g Isophthalsäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Mikrokomposite werden abgetrennt und in analoqer Weise mit 28 g M/F-Harz und Poly(styren-co-maleinsäureanhydrid)-Hydrolysat (hergestellt aus 0,4 g Poly- (styren-co-maleinsäureanhydrid) in Gegenwart von 12,0 g Isophthalsäure in 480 ml Wasser ein zweites Mal verkapselt. Die Kapseln werden abgetrennt, 6 h bei 110 °C nachgehärtet und auf Schwefelfreisetzung und Stabilität in der Kautschukmischung getestet.

Ausbeute, mikroverkapselter Schwefel: 110 g
Extrahierbarer Schwefel: 0, 1 %
Stabilität nach Kautschukeinarbeitung: > 504 h (tc-10%: 1,96 min)

### Beispiel 7

### Doppelwand aus Melamin-Formaldehyd-Harz und Poly(ethylen-co-natriummaleat), chemische Nachhärtung

In einem Rührgefäß werden 96 g feingemahlener Schwefel, 28 g Melamin-Formaldehyd-Harz des Typs PIAMID M 50 und 0,5 g Poly(ethylen-co-natrium-maleat (1 ml einer 50 %igen wassrigen Lösung) sowie 12,0 g Isophthalsäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Mikrokomposite werden abgetrennt und in analoger Weise mit 28 g M/F-Harz und 0,5 g Poly(ethylen-co-natrium-maleat (1 ml einer 50 %igen wässrigen Lösung) in Gegenwart von 12,0 g Isophthalsäure in 480 ml Wasser ein zweites Mal verkapselt. Die Kapseln werden abgetrennt, in 0,1 m Amidosulfonsäure bei 60 °C 1 h nachgehärtet und auf Schwefelfreisetzung und Stabilität in der Kautschukmischung getestet.

Ausbeute, mikroverkapselter Schwefel, filterfeucht:
120 g
Extrahierbarer Schwefel: nicht nachweisbar
Stabilität nach Kautschukeinarbeitung: > 504 h (tc-10%: 1,93 min)

### Beispiel 8

### Komplexe Kapselwand bestehend aus Melaminharz/Polyelektrolytwand und Gleitschicht

100 g analog Beispiel 1 - 7 hergestellte filterfeuchte Mikrokomposite mit Melaminharz/ Polyelektrolytwand werden mit 20 g Calciumstearat gelöst in 0,5 l Toluen bei 90 °C beschichtet. Die beschichteten Mikrokomposite werden bei der Beschichtungstemperatur abgetrennt und luftgetrocknet.

Ausbeute, beschichteter mikroverkapselter Schwefel,
lufttrocken: 106 g
Extrahierbarer Schwefel: nicht nachweisbar
Stabilität nach Kautschukeinarbeitung: > 504 h (tc-10%: 1,95 min)

### Beispiel 9

### Komplexe Kapselwand bestehend aus Melaminharz/Polyelektrolytwand und Gleitschicht

300 g analog Beispiel 1 - 7 hergestellte filterfeuchte Mikrokomposite mit Melaminharz/ Polyelektrolytwand werden mit 45 g Polyacrylat des Typs DEGALAN^{®} gelöst in 0,5 l Aceton, in einem Sprühcoater vom Typ GLATT beschichtet.

Ausbeute, beschichteter mikroverkapselter Schwefel,
lufttrocken: 310 g
Extrahierbarer Schwefel: 0,8 %
Stabilität nach Kautschukeinarbeitung: > 504 h (tc-10%: 1,96 min)

### Beispiel 10

### Singuläre Kapselwand aus organolöslichem Melamin-Formaldehyd-Harz und Poly(ethylen-co-natriummaleat)

In einem Rührgefäß werden 96 g feingemahlener Schwefel, 28 g Melamin-Formaldehyd-Harz des Typs LAMELITE 200, 1,5 g Poly(ethylen-co-natrium-maleat (3 ml einer 50 %igen wässrigen Lösung) und 2,0 g Amidosulfonsäure in 600 ml Isopranol/Wasser-Gemisch (Volumenanteile 2:1) mit einem Hochleistungsrühr- und Dispergiergerät (ULTRA-TURRAX) bei Siedetemperatur intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und auf Schwefelfreisetzung und Stabilität in der Kautschukmischung getestet.

Ausbeute, mikroverkapselter Schwefel, filterfeucht:
105 g
Extrahierbarer Schwefel: 0,1 %
Stabilität nach Kautschukeinarbeitung: 396 h (tc-10%: 1,78 min)

### Beispiel 11

In einem mit entsprechender Rührtechnik ausgestatteten Reaktor werden 42 l Wasser, 8 l einer 1%igen Poly(ethylen-co-maleinsäure)-Lösung sowie 7 l einer 2 N Zitronensäure vorgelegt und auf 60 °C erwärmt. Dieser verdünnten Zitronensäure/Polyelektrolytlösung werden 7,5 1 Melaminharzlösung zudosiert. Nach einer Vorkondensationszeit von 5 min. werden 10 kg Mahlschwefel unter intensiver Mischung mit einem Turbinenrührer rasch eingetragen. Die Mikrokomposite werden abgetrennt und in analoger Weise mit 7,5 l Melaminharz/Polyelektrolytlösung in Gegenwart von 7 l einer 2 N Zitronensäure in 50 1 Wasser ein zweites Mal verkapselt. Die Kapseln werden abgetrennt und in filterfeuchtem Zustand auf Schwefelfreisetzung und Stabilität in der Kautschukmischung getestet. 11,5 kg der doppelt verkapselten Schwefelpartikel werden in filterfeuchtem Zustand mit 500 g Paraffinwachs gelöst in 10 l Benzin bei 70 °C beschichtet. Die beschichteten Mikrokomposite werden bei der Beschichtungstemperatur abgetrennt und luftgetrocknet.

Ausbeute, beschichteter mikroverkapselter Schwefel, trocken: 12,0 kg Extrahierbarer Schwefel: 0,2 % Stabilität nach Kautschukeinarbeitung: > 504 h (tc-1 0%: 1,98 min)

### Beispiel 12

Analog Beispiel 5 werden 10 kg Schwefel aufgeschmolzen, mit M/F-Harz/Poly(styren-comaleinsäureanhydrid)-Hydrolysat doppelt mikroverkapselt, mit einer Paraffinwachsgleitschicht ausgerüstet, separiert und getrocknet. Die Kapseln werden abgetrennt und auf Schwefelfreisetzung und Stabilität in der Kautschukmischung getestet.

Ausbeute, mikroverkapselter Schwefel, trocken:
11,5 kg
Extrahierbarer Schwefel: nicht nachweisbar
Stabilität nach Kautschukeinarbeitung: > 504 h (tc-10%: 2,01 min)

## Patentansprüche

1. Mikrokapseln mit einer polymeren Kapselwand sowie einem mindestens ein Kautschukadditiv enthaltenden Kern,
**dadurch gekennzeichnet,**
**dass** die Kapselwand aus mindestens einer Reaktivharzkomponente und mindestens einer Polyelektrolyt- oder Ionomer-Komponente aufgebaut ist, wobei die Reaktivharzkomponente ein Melamin-Formaldehyd-Harz und/oder ein Polyharnstoffharz ist.

2. Mikrokapseln nach Anspruch 1,
**dadurch gekennzeichnet, dass** die Polyharnstoffharze aus Diisocyanaten und polyfunktionellen Aminen gebildet sind.

3. Mikrokapseln nach einem der vorhergehenden Ansprüche,
**dadurch gekennzeichnet, dass** die Polyelektrolyt-und/oder Ionomer-Komponenten anionisch substituierte Polymere sind.

4. Mikrokapseln nach Anspruch 3,
**dadurch gekennzeichnet, dass** die anionisch substituierten Polymere ausgewählt sind aus der Gruppe bestehend aus den Homo- und Copolymeren der Acryl- und Methacrylsäure, der Maleinsäure, der Vinylphosphorsäure, der Vinylsulfonsäure und der Styrolphosphonsäure.

5. Mikrokapseln nach einem der vorhergehenden Ansprüche,
**dadurch gekennzeichnet, dass** die Kapselwand aus einem in Wasser löslichen Melamin-Formaldehyd-Harz und einem Polyelektrolyten gebildet ist.

6. Mikrokapseln nach einem der vorhergehenden Ansprüche,
**dadurch gekennzeichnet, dass** die Kapselwand aus einem in einem organischen Lösungsmittel löslichen Melamin-Formaldehyd-Harz und einem Ionomer gebildet ist.

7. Mikrokapseln nach einem der vorhergehenden Ansprüche,
**dadurch gekennzeichnet, dass** der Kern aus Schwefel besteht.

8. Mikrokapseln nach einem der vorhergehenden Ansprüche,
**dadurch gekennzeichnet, dass** der Schwefel in flüssiger oder fester Form vorlegt.

9. Mikrokapseln nach einem der vorhergehenden Ansprüche,
**dadurch gekennzeichnet, dass** der Schwefelgehalt der Mikrokapseln mindestens 70 Gew.-%, insbesondere von 80 bis 95 Gew.-% beträgt.

10. Mikrokapseln nach einem der vorhergehenden Ansprüche,
**dadurch gekennzeichnet, dass** die Mikrokapsel eine weitere äußere Kapselwand oder Beschichtung aufweist.

11. Mikrokapseln nach einem der vorhergehenden Ansprüche,
**dadurch gekennzeichnet, dass** die äußere Kapselwand oder Beschichtung aus mindestens einem linearkettigen Polymer, insbesondere Polyacrylate, Polyacrylnitrile, Polyethylenglykole, Ethylzellulose sowie Stärkefettsäureester und Stärkecarbamate langkettiger Isocyanat, besteht.

12. Mikrokapseln nach einem der vorhergehenden Ansprüche,
**dadurch gekennzeichnet, dass** die äußere Kapselwand oder Beschichtung aus mindestens einer niedermolekularen organischen oder anorganischen Substanz, insbesondere aus Wachsen, Fettsäurederivaten, Silikone, Siloxanen und/oder Silikaten, besteht.

13. Mikrokapseln nach einem der vorhergehenden Ansprüche,
**dadurch gekennzeichnet, dass** die Mikrokapseln einen mittleren Partikeldurchmesser von 1 bis 30 µm, insbesondere von 5 bis 20 µm aufweisen.

14. Mikrokapseln nach einem der vorhergehenden Ansprüche,
**dadurch gekennzeichnet, dass** die Wandstärke der Kapselwand von 30 bis 100 nm beträgt.

15. Mikrokapseln nach einem der vorhergehenden Ansprüche,
**dadurch gekennzeichnet, dass** die Mikrokapseln unter Formulierungs- und Verarbeitungsbedingungen in Knetern, Kalandern oder Doppelschneckenextrudern bei Temperaturen bis 120°C, insbesondere bis 140°C thermisch und mechanisch stabil sind.

16. Mikrokapseln nach einem der vorhergehenden Ansprüche,
**dadurch gekennzeichnet, dass** sich bei Vulkanisationsbedingungen die Kapselwände unter Freisetzung des Kautschukadditivs auflösen.

17. Verfahren zur Herstellung von Mikrokapseln mit einem Kern aus mindestens einem Kautschukadditiv mit folgenden Schritten:
a) Das mindestens eine Kautschukadditiv wird in einer Lösung aus mindestens einer ein Reaktivharz bildenden Verbindung und mindestens einer Polyelektrolyt- oder Ionomer-Komponente unter starker Scherung dispergiert und
b) durch Zusatz eines Katalysators und/oder durch Temperatureinwirkung wird eine das Kautschukadditiv einschließende Kapselwand ausgebildet,
wobei in Schritt a) die das Reaktionsharz bildende Komponente ein Präpolymer ist.

18. Verfahren nach Anspruch 16,
**dadurch gekennzeichnet, dass** das Reaktionsharz in Schritt a) in situ aus den das Reaktionsharz bildenden Verbindungen gebildet wird.

19. verfahren nach einem der Ansprüche 16 bis 18,
**dadurch gekennzeichnet, dass** das Reaktivharz ein Melamin-Formaldehyd-Harz und/oder ein Polyharnstoffharz ist.

20. Verfahren nach Anspruch 19,
**dadurch gekennzeichnet, dass** die polyharnstoffharze aus Diisocyanaten und polyfunktionellen Aminen gebildet werden.

21. Verfahren nach einem der Ansprüche 16 bis 20,
**dadurch gekennzeichnet, dass** die Polyelektrolyt-und/oder Ionomer-Komponenten anionisch substituierte Polymere sind.

22. Verfahren nach Anspruch 21,
**dadurch gekennzeichnet, dass** die anionisch substituierten Polymere ausgewählt sind aus der Gruppe bestehend aus den Homo- und Copolymeren der Acryl- und Methacrylsäure, der Maleinsäure, der Vinylphosphorsäure, der Vinylsulfonsäure, des Styrols und der Styrolphosphonsäure.

23. Verfahren nach einem der Ansprüche 16 bis 22,
**dadurch gekennzeichnet, dass** in Schritt a) in wässriger Lösung ein Melamin-Formaldehyd-Harz und ein Polyelektrolyt gelöst werden.

24. Verfahren nach einem der Ansprüche 16 bis 22,
**dadurch gekennzeichnet, dass** in Schritt a) in einem organischen Lösungsmittel ein Melamin-Formaldehyd-Harz und ein Ionomer gelöst werden.

25. Verfahren nach einem der Ansprüche 16 bis 24,
**dadurch gekennzeichnet, dass** als Kautschukadditiv Schwefel in flüssiger oder fester Form eingesetzt wird.

26. Verfahren nach einem der Ansprüche 16 bis 25,
**dadurch gekennzeichnet, dass** im Anschluss an die Ausbildung der Kapselwand diese thermisch und/oder chemisch ausgehärtet wird.

27. Verfahren nach einem der Ansprüche 16 bis 26,
**dadurch gekennzeichnet, dass** auf der Mikrokapsel eine weitere äußere Kapselwand oder Beschichtung abgeschieden wird.

28. Verfahren nach Anspruch 27,
**dadurch gekennzeichnet, dass** die äußere Kapselwand oder Beschichtung aus mindestens einem linearkettigen Polymer, insbesondere Polyacrylate, Polyacrylnitrile, Polyethylenglykole, Ethylzellulose sowie Stärkefettsäureester und Stärkecarbamate langkettiger Isocyanate, besteht.

29. Verfahren nach Anspruch 27,
**dadurch gekennzeichnet, dass** die äußere Kapselwand oder Beschichtung aus mindestens einer niedermolekularen organischen oder anorganischen Substanz, insbesondere aus Wachsen, Fettsäurederivaten, Silikonen, Siloxane und/oder Silikaten, besteht.

30. Verwendung der Mikrokapseln nach einem der Ansprüche 1 bis 16 bei der Vulkanisation von Natur- und Synthese-Kautschuken.

## Claims

1. Microcapsules having a polymer capsule wall and also a core which comprises at least one rubber additive,
***characterised in that***
the capsule wall is composed of at least one reactive resin component and at least one polyelectrolyte component or ionomer component, the reactive resin component being a melamine formaldehyde resin and/or a polyurea resin.

2. Microcapsules according to claim 1,
**characterised in that** the polyurea resins are formed from diisocyanates and polyfunctional amines.

3. Microcapsules according to one of the preceding claims,
**characterised in that** the polyelectrolyte components and/or ionomer components are anionically substituted polymers.

4. Microcapsules according to claim 3,
**characterised in that** the anionically substituted polymers are selected from the group consisting of the homo- and copolymers of acrylic and methacrylic acid, of maleic acid, of vinyl phosphorus acid, of vinyl sulphonic acid and of styrene phosphonic acid.

5. Microcapsules according to one of the preceding claims,
**characterised in that** the capsule wall is formed from a melamine formaldehyde resin which is soluble in water and a polyelectrolyte.

6. Microcapsules according to one of the preceding claims,
**characterised in that** the capsule wall is formed from a melamine formaldehyde resin which is soluble in an organic solvent and an ionomer.

7. Microcapsules according to one of the preceding claims,
**characterised in that** the core consists of sulphur.

8. Microcapsules according to one of the preceding claims,
**characterised in that** the sulphur is present in liquid or solid form.

9. Microcapsules according to one of the preceding claims,
**characterised in that** the sulphur content of the microcapsules is at least 70% by weight, in particular from 80 to 95% by weight.

10. Microcapsules according to one of the preceding claims,
**characterised in that** the microcapsule has a further outer capsule wall or coating.

11. Microcapsules according to one of the preceding claims,
**characterised in that** the outer capsule wall or coating consists of at least one straight-chain polymer, in particular polyacrylates, polyacrylonitriles, polyethylene glycols, ethylcellulose and also starch fatty acid esters and starch carbamates of long-chain isocyantes.

12. Microcapsules according to one of the preceding claims,
**characterised in that** the outer capsule wall or coating consists of at least one low-molecular organic or inorganic substance, in particular waxes, fatty acid derivatives, silicones, siloxanes and/or silicates.

13. Microcapsules according to one of the preceding claims,
**characterised in that** the microcapsules have an average particle diameter of 1 to 30 µm, in particular from 5 to 20 µm.

14. Microcapsules according to one of the preceding claims,
**characterised in that** the wall thickness of the capsule wall is from 30 to 100 nm.

15. Microcapsules according to one of the preceding claims,
**characterised in that** the microcapsules are thermally and mechanically stable under formulation and processing conditions in kneaders, calenders or twin-screw extruders at temperatures up to 120°C, in particular up to 140°C.

16. Microcapsules according to one of the preceding claims,
**characterised in that** the capsule walls dissolve under vulcanisation conditions with release of the rubber additive.

17. Method for the production of microcapsules having a core consisting of at least one rubber additive, with the following steps:
a) the at least one rubber additive is dispersed with strong shearing in a solution comprising at least one compound which forms a reactive resin and at least one polyelectrolyte component or ionomer component and
b) by the addition of a catalyst and/or by the effect of temperature, a capsule wall which encloses the rubber additive is formed,
in step a), the component which forms the reaction resin being a prepolymer.

18. Method according to claim 16,
**characterised in that** the reaction resin in step a) is formed in situ from the compounds which form the reaction resin.

19. Method according to one of the claims 16 to 18,
**characterised in that** the reactive resin is a melamine formaldehyde resin and/or a polyurea resin.

20. Method according to claim 19,
**characterised in that** the polyurea resins are formed from diisocyanates and polyfunctional amines.

21. Method according to one of the claims 16 to 20,
**characterised in that** the polyelectrolyte components and/or ionomer components are anionically substituted polymers.

22. Method according to claim 21,
**characterised in that** the anionically substituted polymers are selected from the group consisting of the homo- and copolymers of acrylic and methylacrylic acid, of maleic acid, of vinyl phosphorus acid, of vinyl sulphonic acid, of styrene and of styrene phosphonic acid.

23. Method according to one of the claims 16 to 22,
**characterised in that,** in step a), a melamine formaldehyde resin and a polyelectrolyte are dissolved in aqueous solution.

24. Method according to one of the claims 16 to 22,
**characterised in that**, in step a), a melamine formaldehyde resin and an ionomer are dissolved in an organic solvent.

25. Method according to one of the claims 16 to 24,
**characterised in that** sulphur in liquid or solid form is used as rubber additive.

26. Method according to one of the claims 16 to 25,
**characterised in that**, following the formation of the capsule wall, the latter is cured thermally and/or chemically.

27. Method according to one of the claims 16 to 26,
**characterised in that** a further outer capsule wall or coating is deposited on the microcapsule.

28. Method according to claim 27,
**characterised in that** the outer capsule wall or coating consists of at least one straight-chain polymer, in particular polyacrylates, polyacrylonitriles, polyethylene glycols, ethylcellulose and also starch fatty acid esters and starch carbamates of long-chain isocyanates.

29. Method according to claim 27,
**characterised in that** the outer capsule wall or coating consists of at least one low-molecular organic or inorganic substance, in particular waxes, fatty acid derivatives, silicones, siloxanes and/or silicates.

30. Use of the microcapsules according to one of the claims 1 to 16 during vulcanisation of natural and synthetic rubbers.

## Revendications

1. Microcapsules comportant une paroi de capsule polymère ainsi qu'un noyau contenant au moins un additif pour caoutchouc, **caractérisées en ce que** la paroi de capsule est à base d'au moins un composant de type résine réactive et d'au moins un composant ionomère ou polyélectrolyte, le composant de type résine réactive étant une résine mélamine-formaldéhyde et/ou une résine polyurée.

2. Microcapsules selon la revendication 1, **caractérisées en ce que** les résines polyurée sont formées à partir de diisocyanates et d'amines polyfonctionnelles.

3. Microcapsules selon l'une quelconque des revendications précédentes, **caractérisées en ce que** les composants ionomères et/ou polyélectrolytes sont des polymères à substitution anionique.

4. Microcapsules selon la revendication 3, **caractérisées en ce que** les polymères à substitution anionique sont choisis dans l'ensemble constitué par les homo- et copolymères de l'acide acrylique et de l'acide méthacrylique, de l'acide maléique, de l'acide vinylphosphorique, de l'acide vinylsulfonique et de l'acide styrènephosphonique.

5. Microcapsules selon l'une quelconque des revendications précédentes, **caractérisées en ce que** la paroi de capsule est formée à partir d'une résine mélamine-formaldéhyde soluble dans l'eau et d'un polyélectrolyte.

6. Microcapsules selon l'une quelconque des revendications précédentes, **caractérisées en ce que** la paroi de capsule est formée à partir d'un ionomère et d'une résine mélamine-formaldéhyde soluble dans un solvant organique.

7. Microcapsules selon l'une quelconque des revendications précédentes, **caractérisées en ce que** le noyau est constitué de soufre.

8. Microcapsules selon l'une quelconque des revendications précédentes, **caractérisées en ce que** le soufre se trouve sous forme liquide ou solide.

9. Microcapsules selon l'une quelconque des revendications précédentes, **caractérisées en ce que** la teneur en soufre des microcapsules est d'au moins 70 % en poids, en particulier de 80 à 95 % en poids.

10. Microcapsules selon l'une quelconque des revendications précédentes, **caractérisées en ce que** la microcapsule comporte une autre paroi de capsule externe ou un enrobage.

11. Microcapsules selon l'une quelconque des revendications précédentes, **caractérisées en ce que** la paroi de capsule externe ou l'enrobage consiste en au moins un polymère à chaîne linéaire, en particulier des polyacrylates, des polyacrylonitriles, des polyéthylèneglycols, l'éthylcellulose ainsi que des esters d'acides gras et d'amidon et des carbamates d'amidon d'isocyanates à longue chaîne.

12. Microcapsules selon l'une quelconque des revendications précédentes, **caractérisées en ce que** la paroi de capsule externe ou l'enrobage consiste en au moins une substance organique ou inorganique de faible masse moléculaire, en particulier de cires, de dérivés d'acides gras, de silicones, de siloxanes et/ou de silicates.

13. Microcapsules selon l'une quelconque des revendications précédentes, **caractérisées en ce que** les microcapsules ont un diamètre moyen de particule de 1 à 30 µm, en particulier de 5 à 20 µm.

14. Microcapsules selon l'une quelconque des revendications précédentes, **caractérisées en ce que** l'épaisseur de la paroi de capsule va de 30 à 100 nm.

15. Microcapsules selon l'une quelconque des revendications précédentes, **caractérisées en ce que** les microcapsules sont mécaniquement et thermiquement stables à des températures de jusqu'à 120 °C, en particulier de jusqu'à 140 °C dans les conditions de formulation et de mise en oeuvre dans des malaxeurs, des calandres ou des extrudeuses double vis.

16. Microcapsules selon l'une quelconque des revendications précédentes, **caractérisées en ce que** les parois des capsules se dissolvent dans les conditions de vulcanisation, avec libération de l'additif pour caoutchouc.

17. Procédé pour la production de microcapsules comportant un noyau à base d'au moins un additif pour caoutchouc, comportant les étapes suivantes :
a) on disperse sous fort cisaillement ledit au moins un additif pour caoutchouc dans une solution d'au moins un composé formant une résine réactive et d'au moins un composant ionomère ou polyélectrolyte et
b) une paroi de capsule renfermant l'additif pour caoutchouc est formée par addition d'un catalyseur et/ou sous l'effet de la température,
dans l'étape a) le composant formant la résine réactive étant un prépolymère.

18. Procédé selon la revendication 16, **caractérisé en ce que** la résine réactive dans l'étape a) est formée in situ à partir des composés formant la résine réactive.

19. Procédé selon l'une quelconque des revendications 16 à 18, **caractérisé en ce que** la résine réactive est une résine mélamine-formaldéhyde et/ou une résine polyurée.

20. Procédé selon la revendication 19, **caractérisé en ce que** les résines polyurée sont formées à partir de diisocyanates et d'amines polyfonctionnelles.

21. Procédé selon l'une quelconque des revendications 16 à 20, **caractérisé en ce que** les composants ionomères et/ou polyélectrolytes sont des polymères à substitution anionique.

22. Procédé selon la revendication 21, **caractérisé en ce que** les polymères à substitution anionique sont choisis dans l'ensemble constitué par les homo- et copolymères de l'acide acrylique et de l'acide méthacrylique, de l'acide maléique, de l'acide vinylphosphorique, de l'acide vinylsulfonique, du styrène et de l'acide styrènephosphonique.

23. Procédé selon l'une quelconque des revendications 16 à 22, **caractérisé en ce que** dans l'étape a) une résine mélamine-formaldéhyde et un polyélectrolyte sont dissous en solution aqueuse.

24. Procédé selon l'une quelconque des revendications 16 à 22 **caractérisé en ce que** dans l'étape a) une résine mélamine-formaldéhyde et un ionomère sont dissous dans un solvant organique.

25. Procédé selon l'une quelconque des revendications 16 à 24, **caractérisé en ce qu'**on utilise comme additif pour caoutchouc du soufre sous forme liquide ou solide.

26. Procédé selon l'une quelconque des revendications 16 à 25, **caractérisé en ce qu'**à la suite de la formation de la paroi de capsule, celle-ci est durcie thermiquement et/ou chimiquement.

27. Procédé selon l'une quelconque des revendications 16 à 26, **caractérisé en ce qu'**on dépose sur la microcapsule une autre paroi de capsule externe ou un enrobage.

28. Procédé selon la revendication 27, **caractérisé en ce que** la paroi de capsule externe ou l'enrobage consiste en au moins un polymère à chaîne linéaire, en particulier des polyacrylates, des polyacrylonitriles, des polyéthylèneglycols, des éthylcelluloses ainsi que des esters d'acides gras et d'amidon et des carbamates d'amidon d'isocyanates à longue chaîne.

29. Procédé selon la revendication 27, **caractérisé en ce que** la paroi de capsule externe ou l'enrobage consiste en au moins une substance organique ou inorganique de faible masse moléculaire, en particulier de cires, de dérivés d'acides gras, de silicones, de siloxanes et/ou de silicates.

30. Utilisation des microcapsules selon l'une quelconque des revendications 1 à 16, dans la vulcanisation de caoutchoucs naturels et de caoutchoucs de synthèse.
